# EUROPEAN PATENT APPLICATION

(11) **EP 2 617 512 A1**
(43) Date of publication of application: **24.07.2013**
(21) Application number: 11825149.5
(22) Date of filing: 13.09.2011
(51) Int. Cl.: B23K 15/00, B23K 26/32, F02B 39/00, B23K 103/18

(54) **METHOD FOR WELDING STEEL MATERIAL TO NI-BASED SUPERALLOY, AND WELDING JOINT**

(30) Priority: 16.09.2010 JP 2010207977
(71) Applicant: IHI Corporation, Tokyo 135-8710 (JP)
(72) Inventor: OIWA Naoki, Tokyo 135-8710 (JP); WATANABE Kosuke, Tokyo 135-8710 (JP); NEZAKI Koji, Tokyo 135-8710 (JP)
(74) Representative: Lamb, Martin John Carstairs
(86) International application number: PCT/JP2011/070836
(87) International publication number: WO 2012/036147

(57) **Abstract**

When a turbine impeller (4) formed from an Ni-based superalloy and a rotor shaft (2) formed from a steel material are joined by being fused together via welding in a boundary portion, a mixing ratio of a welding metal (6) that is formed in the boundary portion by fusing together the Ni-based superalloy forming the turbine impeller (4) and the steel material forming the rotor shaft (2) is between 0.5 and 0.8. As a result, it is possible to obtain a sound welding joint in which there are no cracks in the boundary between the welding metal (6) and the Ni-based superalloy (4).

## Description

### Technical Field

The present invention relates to a method for welding a steel material to an Ni-based superalloy that is used when the steel material such as low alloy steel, which is a dissimilar metal from an Ni-based superalloy, is joined by welding to the Ni-based superalloy, and to a welding joint that is manufactured by this welding method.
Priority is claimed on Japanese Patent Application No. 2010-207977, filed September 16, 2010, the contents of which are incorporated herein by reference.

### Background Art

Conventionally, for example, in the field of vehicle superchargers, Inconel (registered trademark) 713C is employed for an impeller, and a low alloy steel is employed for a center shaft. These are joined together by electron beam welding.
In this welding, other filler metal is not used, but both Inconel713C, which forms the impeller, and low alloy steel, which forms the center shaft, are directly fused and welded together.
In recent years, Ni-based superalloys such as Mar-M (registered trademark), which has a higher melting point (i.e., has superior heat resistance), are being employed in impellers in order to enable the exhaust gases to reach higher temperatures in order to protect the environment (see, for example, Non-patent document 1).

### Citation List

### Non-Patent Document

Non-patent document 1: Journal of the Gas Turbine Society of Japan Vol. 33, No. 4 (2005), pp. 3-10

### Summary of Invention

### Technical Problem

However, when an impeller that is formed from the aforementioned Ni-based superalloy having superior heat resistance, and a center shaft that is formed from a low alloy steel are joined together by electron beam welding, there is a possibility of hot cracking (i.e., boundary cracking) occurring in the boundary between a weld metal that is formed when the Ni-based superalloy and the low alloy steel are fused together and the Ni-based superalloy due to a marked difference in their melting points, and solving this problem has hitherto proved to be difficult.

The present invention was conceived in view of the above-described conventional problem and it is an object thereof to provide a method of welding a steel material to an Ni-based superalloy that, when the steel material, which is a dissimilar metal from an Ni-based superalloy, is joined by welding to the Ni-based superalloy such as Mar-M, makes it possible to obtain a sound welding joint in which there are no cracks in the boundary between a metal that is formed when the Ni-based superalloy and the low alloy steel are fused together and the Ni-based superalloy, and to also provide a welding joint.

### Solution to Problem

A first aspect of the present invention is a method of welding a steel material to an Ni-based superalloy in which, when an Ni-based superalloy containing at least one of IN-100, Mar-M246, and Mar-M247 and a steel material such as low alloy steel, which is a dissimilar metal in that it is different from the Ni-based superalloy, are joined by being fused together via welding in a boundary portion between the Ni-based superalloy and the steel material, a mixing ratio of the welding metal that is formed in the boundary portion by fusing together the Ni-based superalloy and the steel material is between 0.5 and 0.8.
Note that the mixing ratio of the welding metal that is formed by fusing together the Ni-based superalloy and the steel material is a weight ratio, and is the proportion of the welding metal occupied by the Ni-based superalloy. Namely, the mixing ratio = Ni-based superalloy / (Ni-based superalloy + steel material).

Here, if the target position of the welding beam is set to the boundary between the Ni-based superalloy and the steel material, then naturally the mixing ratio of the welding metal formed by fusing together the Ni-based superalloy and the steel material is approximately 0.5. This mixing ratio can be controlled by changing the target position of the welding beam and the welding depth depending on the various welding conditions.

As is described above, if the mixing ratio of the welding metal formed by fusing together the Ni-based superalloy and the steel material is controlled to approximately 0.5, then only limited types of Ni-based superalloy will enable the strength of the welding joint to be increased.
However, if the above-described mixing ratio is controlled to approximately 0.6, then a greater number of types of Ni-based superalloy will enable the strength of the welding joint to be increased, so that this is more preferable. Moreover, if the above-described mixing ratio is controlled to approximately 0.7, then the majority of Ni-based superalloys will enable the strength of the welding joint to be increased, so that this is even more preferable.

Therefore, in the method of welding a steel material to an Ni-based superalloy according to a second aspect of the present invention, a structure is employed in which the mixing ratio of the welding metal that is formed in the boundary portion by fusing together the Ni-based superalloy and the steel material is between 0.6 and 0.8. Moreover, in the method of welding a steel material to an Ni-based superalloy according to a third aspect of the present invention, a structure is employed in which the mixing ratio of the welding metal that is formed in the boundary portion by fusing together the Ni-based superalloy and the steel material is between 0.7 and 0.8.

Moreover, in the method of welding a steel material to an Ni-based superalloy according to a fourth aspect of the present invention, the Ni-based superalloy and the steel material are joined by being fused together via electron beam welding or laser welding in the boundary portion. In this case, irrespective of whether the welding is electron beam welding or laser welding, the diameter of the welding beam is desirably set to between 0.1 and 0.8 mm.

Moreover, a welding joint according to a fifth aspect of the present invention is formed via any of the above-described methods of welding a steel material to an Ni-based superalloy.

In the method of welding a steel material to an Ni-based superalloy of the present invention, by, for example, changing the target position of the welding beam in the boundary portion between the Ni-based superalloy and the steel material, it is possible to appropriately control the composition of the welding metal that is formed by fusing together the Ni-based superalloy and the steel material, which is a dissimilar metal from the Ni-based superalloy. Because of this, it becomes possible to keep the difference between the melting point of the fused metal and the melting point of the Ni-based superalloy to a minimum. As a result, when a steel material, which is a dissimilar metal from an Ni-based superalloy, is joined by welding to Ni-based superalloy, such as IN100, containing a number of additional elements, a sound welding joint is obtained in which there are no boundary cracks.

### Advantageous Effects of Invention

In the method of welding a steel material to an Ni-based superalloy of the present invention, when the steel material, which is a dissimilar metal from an Ni-based superalloy, is joined by welding to the Ni-based superalloy, it is possible to prevent cracks being generated in the boundary between the Ni-based superalloy and the welding metal that is formed by fusing together both the Ni-based superalloy and the steel material, which is a dissimilar metal from the Ni-based superalloy. As a result, the extremely beneficial effect is obtained that it is possible to obtain a sound welding joint in which there are no boundary cracks.

### Brief Description of Drawings

FIG. 1 is a schematic structure explanatory view showing a turbocharger that has a welding joint according to an embodiment of the present invention.
FIG. 2 is a partially enlarged cross-sectional explanatory view showing a state prior to the welding of the welding joint in the turbocharger shown in FIG. 1.
FIG. 3 is a partially enlarged cross-sectional explanatory view showing a state after the welding of the welding joint in the turbocharger shown in FIG. 1.
FIG. 4 is a graph showing the effects of a method of welding a steel material to an Ni-based superalloy according to the present invention.
FIG. 5 is a schematic structure explanatory view of a laser welding apparatus that is used in the manufacturing of a welding joint in the turbocharger shown in FIG. 1.

### Description of Embodiments

Hereinafter, the present invention will be described based on the drawings.

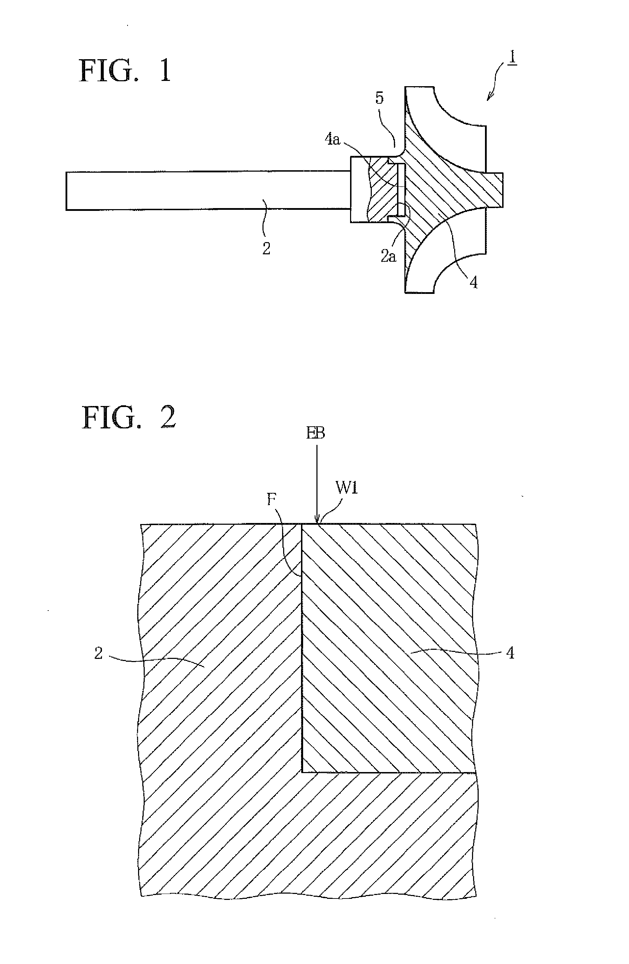

FIG. 1 shows an embodiment of a welding joint according to the present invention. In this embodiment, a case in which the welding joint according to the present invention is used for the welding portion of a turbocharger is described as an example.

As is shown in FIG. 1, this turbocharger 1 is provided with a rotor shaft 2 that is formed from a low alloy steel (for example, chromoly steel), which is a steel material, and a turbine impeller 4 that is formed from an Ni-based superalloy (for example, IN100) having a higher heat-resistance than the low alloy steel, and that is fixed to one end portion of the rotor shaft 2. Note that a compressor impeller (not shown) is provided at the other end portion of the rotor shaft 2 of this turbocharger 1.

The turbocharger 1 having the aforementioned structure is mounted in an internal combustion engine of a vehicle, and is installed such that the turbine impeller 4 is positioned in an exhaust duct, and the compressor impeller is positioned in an intake duct. By installing the turbocharger 1 in this manner, the turbine impeller 4 is rotated by the exhaust flow, and the rotation of the turbine impeller 4 is transmitted to the compressor impeller via the rotor shaft 2. As a result, the compressor impeller is rotated so that it compresses the intake air.

A circular protruding portion 2a is formed in the center of an end surface on the turbine impeller 4 side of this rotor shaft 2. A circular recessed portion 4a is formed in the center of an end surface of the turbine impeller 4. The protruding portion 2a of the rotor shaft 2 and the recessed portion 4a of the turbine impeller 4 engage with each other so as to form a socket and spigot joint. The portions of this socket and spigot joint that mutually abut against each other, namely, the respective end surfaces of the rotor shaft 2 and the turbine impeller 4, are joined together by welding so as to form a welding joint 5 and, as a result, the turbocharger 1 is formed.

The welding joint 5 of this turbocharger 1 is formed by setting the rotor shaft 2, which is formed from the low alloy steel, and the turbine impeller 4, which is formed from the Ni-based superalloy, that have been integrated into a single body in a state in which the protruding portion 2a and the recessed portion 4a are mutually engaged with each other and are centered on the same axis, and then irradiating an electron beam over the entire circumference of the aforementioned abutting portion while simultaneously rotating the rotor shaft 2 and the turbine impeller 4 around the axis of the rotor shaft 2 so as to weld the rotor shaft 2 and the turbine impeller 4 together.

Next, a welding method that is used to obtain the welding joint 5 of the above-described turbocharger 1, namely, the method of welding a steel material to an Ni-based superalloy according to the present invention will be described.

As is shown in FIG. 2, prior to the welding, a toroidal end surface that surrounds the protruding portion 2a of the rotor shaft 2, and a toroidal end surface that surrounds the recessed portion 4a of the turbine impeller 4 are mutually abutted together, so as to form a boundary face F that is perpendicular to the axis of the rotor shaft 2.

Next, while the rotor shaft 2 and the turbine impeller 4, which have been integrated into a single body, are being rotated around the axis of the rotor shaft 2, an electron beam EB is irradiated onto the above-described abutting portion from an electron gun (not shown) so that the entire circumference of the abutting portion is welded.

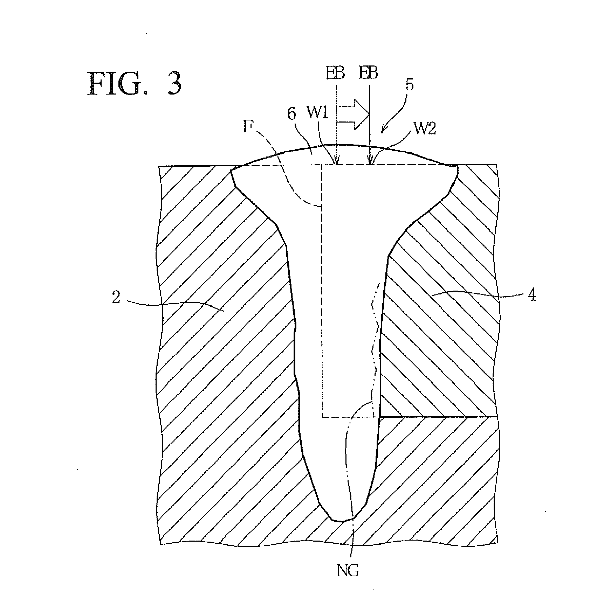

When this welding has finished, as is shown in FIG. 3, a welding metal 6 is formed where the rotor shaft 2 and the turbine impeller 4 including the boundary face F have fused together. This welding metal 6 is metal formed by the fusion of the rotor shaft 2 and the turbine impeller 4, namely, by the melting together of the low alloy metal and the Ni-based superalloy.

In the above-described weld, if a beam irradiation position (i.e., a target position of the electron beam) W1 is set in the vicinity of the boundary face F in the abutting portion, then the mixing ratio of the welding metal 6 that is obtained by fusing together the Ni-based superalloy and the low alloy metal (i.e., the proportion of the welding metal 6 occupied by the Ni-based superalloy) is substantially 0.5. At this time, if the difference between the nickel content in the welding metal 6 and the nickel content in the Ni-based superalloy in the turbine impeller 4 is so great as to generate a large difference between the respective melting points thereof, then weld crack (NG portion) along the fusion boundary as those shown by the virtual line in Fig.3, is easily formed.

In the welding method according to the embodiment of the present invention, while considering various welding conditions, for example, by altering the irradiation position W1 of the electron beam EB to an irradiation position W2 that is closer to the turbine impeller 4 side, as is shown by the large arrow outline in FIG. 3, the mixing ratio of the welding metal 6 is controlled, and the difference between the respective melting points of the welding metal 6 and the Ni-based superalloy forming the turbine impeller 4 is reduced. Note that it is also possible to control the mixing ratio of the welding metal 6 by raising or lowering the irradiation depth of the electron beam EB while considering various welding conditions.

In the welding method according to the above-described embodiment, the mixing ratio (i.e., the composition) of the welding metal 6, which is obtained by fusing together the Ni-based superalloy and the low alloy steel, is appropriately controlled by changing the irradiation position W1 of the electron beam EB to the irradiation position W2, which is closer to the turbine impeller 4 side, in the boundary portion between the rotor shaft 2 and the turbine impeller 4, for example, by shifting the irradiation position of an electron beam having a beam diameter of 0.1 to 0.8 mm a distance of 0.1 mm towards the turbine impeller 4 side. Therefore, it becomes possible to keep the difference between the melting point of the welding metal 6 and the melting point of the Ni-based superalloy of the turbine impeller 4 to a minimum. As a result, a sound welding joint 5 is obtained in which there are no boundary cracks.

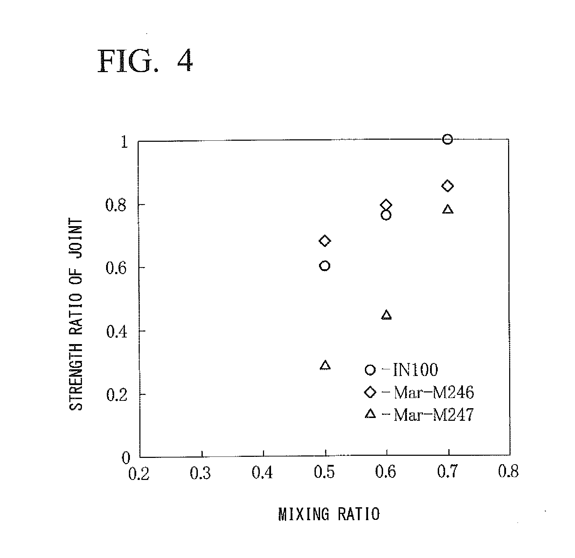

Here, the effects of the welding metal mixing ratio (= Ni-based superalloy / (Ni-based superalloy + steel material); weight ratio) on the respective welding joint strength ratios were examined when three different types of Ni-based superalloy, namely, IN100, Mar-M246 and Mar-M247 were used for the turbine impeller 4, and when CrMo steel was used as the low alloy steel of the steel material of the rotor shaft 2, which is a dissimilar metal from the Ni-based superalloy. The results of this are shown in FIG. 4.

As is shown in FIG. 4, irrespective of whether IN100, Mar-M246, or Mar-M247 was used, if the mixing ratio of the welding metal 6 that was obtained by fusing together the Ni-based superalloy and the low alloy steel was increased, then a high strength ratio of the welding joint 5 was obtained as a result of this increase.

At this time, if the mixing ratio is controlled to approximately 0.5, then in the case of two types of Ni-based superalloy, namely, IN100 and Mar-M246, it is possible to raise the strength ratio of the welding joint 5. Moreover, if the mixing ratio is controlled to approximately 0.6 by changing the electron beam irradiation position, or by changing the irradiation depth, then in the same way as when the mixing ratio is 0.5, it is possible to raise the strength ratio of the welding joint 5 in the case of the two types of Ni-based superalloy IN100 and Mar-M246. If the mixing ratio is controlled to 0.7, then it is possible to raise the strength ratio of the welding joint 5 in the case of any of the Ni-based superalloys, namely, IN100, Mar-M246, and Mar-M247.

Accordingly, in the welding method according to this embodiment, it was discovered that if the mixing ratio (i.e., the composition) of the welding metal 6 that is obtained by fusing together the Ni-based superalloy and the low alloy steel, which is a dissimilar material from the Ni-based superalloy, is appropriately controlled, it becomes possible to obtain an increase in the strength ration of the welding joint 5 and that, as a result, it was established that a sound welding joint 5 can be obtained in which there are no boundary cracks.

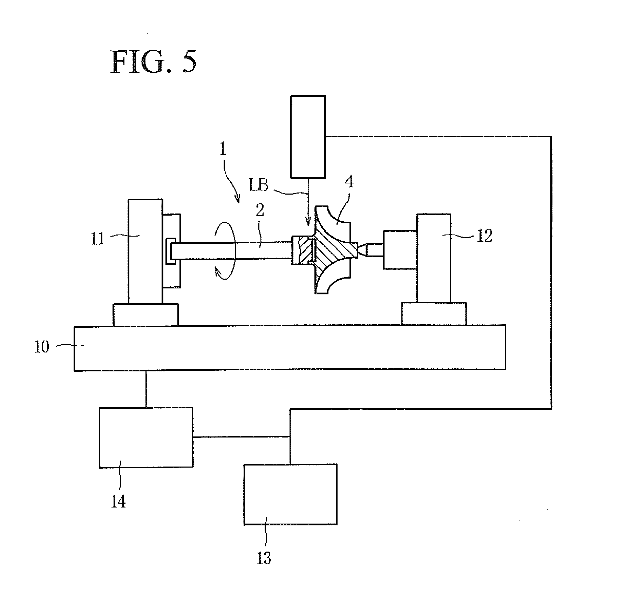

In the above-described embodiment, a case is described in which the welding joint 5 is obtained by irradiating the electron beam EB towards the mutually abutting portions of the rotor shaft 2 and the turbine impeller 4, however, it is also possible to use a laser welding apparatus (an abridged example thereof is shown in FIG. 5) for the rest of the structure.

This laser welding apparatus is provided with a faceplate 11 that is placed on top of a bed 10, a tailstock 12 that is placed on the bed 10 facing the faceplate 11, a laser oscillator 13 that irradiates a laser beam LB onto the mutually abutting portions of the respective end surfaces of the rotor shaft 2 and the turbine impeller 4, and a control unit 14 that controls welding conditions such as the laser output and laser beam irradiation position.

In this laser welding apparatus, after the rotor shaft 2, which is formed from the low alloy steel, and the turbine impeller 4, which is formed from the Ni-based superalloy, have been integrated into a single body in a state in which the rotor shaft 2 and the turbine impeller 4 are centered on the same axis, and have been set between the faceplate 11 and the tailstock 12 on top of the bed 10, the laser beam LB is irradiated onto the entire circumference of the abutting portion of the rotor shaft 2 and the turbine impeller 4 while simultaneously rotating the rotor shaft 2 and the turbine impeller 4 around the center axis of the rotor shaft 2 by the operation of the faceplate 11, resulting in the rotor shaft 2 and the turbine impeller 4 being welded together.

In this laser welding apparatus, the bed 10 is operated by commands from the control unit 14 that are based on a variety of welding conditions, and by changing the irradiation position of the laser beam LB in the boundary portion between the rotor shaft 2 and the turbine impeller 4, the mixing ratio of the welding metal 6 that is formed by fusing together the Ni-based superalloy and the low alloy steel is appropriately controlled.

Because it is also possible, when using this laser welding apparatus as well, to keep to a minimum the difference between the melting point of the welding metal 6 and the melting point of the Ni-based superalloy of the turbine impeller 4, a sound welding joint 5 having no boundary cracks can be obtained.

Neither the method of welding a steel material to an Ni-based superalloy, nor the structure of the welding joint of the present invention are limited to those in the described embodiment.

### Industrial Applicability

According to the method of welding a steel material to an Ni-based superalloy of the present invention, when the steel material, which is a dissimilar metal from an Ni-based superalloy, is joined by welding to the Ni-based superalloy, it is possible to prevent cracks being generated in the boundary between the Ni-based superalloy and the welding metal that is formed by fusing together the Ni-based superalloy and the steel material, which is a dissimilar metal from the Ni-based superalloy. As a result, it is possible to obtain a sound welding joint in which there are no boundary cracks.

**Reference Signs List**

| | |
|---|---|
| 2 | ROTOR SHAFT (STEEL MATERIAL) |
| 4 | TURBINE IMPELLER (NI-BASED SUPERALLOY) |
| 5 | WELDING JOINT |
| 6 | WELDING METAL |

## Claims

1. A method of welding a steel material to an Ni-based superalloy, wherein, when an Ni-based superalloy and a steel material, which is a dissimilar metal in that it is different from the Ni-based superalloy, are joined by being fused together via welding in a boundary portion between the Ni-based superalloy and the steel material, a mixing ratio of a welding metal that is formed in the boundary portion by fusing together the Ni-based superalloy and the steel material is between 0.5 and 0.8.

2. The method of welding a steel material to an Ni-based superalloy according to claim 1, wherein the mixing ratio of the welding metal that is formed in the boundary portion by fusing together the Ni-based superalloy and the steel material is between 0.6 and 0.8.

3. The method of welding a steel material to an Ni-based superalloy according to claim 2, wherein the mixing ratio of the welding metal that is formed in the boundary portion by fusing together the Ni-based superalloy and the steel material is between 0.7 and 0.8.

4. The method of welding a steel material to an Ni-based superalloy according to claim 1, wherein the Ni-based superalloy and the steel material are joined by being fused together via electron beam welding or laser welding in the boundary portion.

5. A welding joint that is formed via the method of welding a steel material to an Ni-based superalloy according to claim 1.
